Europäisches Patentamt

(19) **European Patent Office**

Office européen des brevets

(11) Numéro de publication: **0 024 364**
**B1**

(12) # FASCICULE DE BREVET EUROPEEN

(45) Date de publication du fascicule du brevet:
**01.02.84**

(51) Int. Cl.³: **H 01 M 2/10,** G 04 G 1/00

(21) Numéro de dépôt: **80200740.1**

(22) Date de dépôt: **04.08.80**

(54) **Dispositif de maintien d'une pile dans une montre-bracelet électronique.**

(30) Priorité: **21.08.79 CH 7629/79**

(43) Date de publication de la demande:
**04.03.81 Bulletin 81/9**

(45) Mention de la délivrance du brevet:
**01.02.84 Bulletin 84/5**

(84) Etats contractants désignés:
**DE FR GB**

(56) Documents cités:
**GB - A - 1 468 243**
**JP - A - 54 098 670**
**US - A - 3 392 365**
**US - A - 4 107 400**
**US - A - 4 120 147**

(73) Titulaire: **Eta A.G. Ebauches-Fabrik,**
**Schildruststrasse 17, CH-2540 Grenchen (Canton de Soleure) (CH)**

(72) Inventeur: **Perrot, Friedrich, Rolliweg 78,**
**CH-2543 Lengnau Canton de Berne (CH)**

(74) Mandataire: **Rochat, Daniel Jean et al, Bovard SA Ingénieurs-conseils ACP Optingenstrasse 16,**
**CH-3000 Bern 25 (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Dispositif de maintien d'une pile dans une montre-bracelet électronique

Jusqu'à maintenant, le problème de la fixation de la ou des piles dans les montres-bracelet électroniques n'a pas été résolu de façon satisfaisante. Un grand nombre de dispositifs déjà connus maintiennent la pile et établissent les contacts uniquement au moyen d'éléments élastiques. Par rapport à d'autres dispositifs qui utilisent des brides de fixation fixées au mouvement par des vis, ils présentent l'avantage d'éviter certaines opérations difficiles à automatiser au moment du montage et de l'emboîtage des mouvements.

Les dispositifs connus n'utilisant que des moyens élastiques se divisent eux-mêmes en deux catégories. Une première catégorie dans laquelle on peut situer, par exemple les dispositifs connus selon les brevets US 4 068 464, 4 051 665 et 3 992 870, utilisent des plaques élastiques conductrices qui s'étendent au revers du mouvement, c'est-à-dire entre la ou les piles et le fond du boîtier et qui sont fixées élastiquement au bâti du mouvement. Ces plaques retiennent la ou les piles dans le sens axial et assurent la connexion de l'un des pôles avec le circuit de la montre. Leur inconvénient est qu'elles doivent être ajustées à la fois au mouvement et aux piles. Il faut donc programmer la fabrication d'éléments différents pour les différents calibres prévus et, dans le cadre de chaque calibre, pour les différents types de piles utilisables avec ce calibre. On sait, en effet, qu'il est usuel de prévoir la livraison de certains calibres avec des piles à longue durée de vie relativement épaisses ou avec des piles de hauteur réduite permettant la réalisation de montres extra-plates. Ces dispositifs connus compliquent donc la fabrication. De plus, dans le cas où l'on cherche à réaliser des montres de faible épaisseur, leur présence constitue une entrave à l'obtention du résultat visé.

On connaît également des dispositifs de maintien dans lesquels les éléments actifs élastiques agissent latéralement sur la ou les piles. Le brevet anglais 1 468 243 contient un exemple d'un tel dispositif. Avec une telle réalisation, il est possible de loger indifféremment dans un même mouvement, des piles de différentes hauteurs. On a constaté toutefois qu'en cas de choc axial la pile peut se déplacer, de sorte que le contact avec le pôle situé sur la face supérieure de la pile peut être rompu ou tout au moins perturbé.

Dans d'autres dispositifs du même genre, on a prévu des moyens supplémentaires pour empêcher un déplacement axial de la pile en cas de choc. Selon le brevet US 4 107 400, dans lequel les contacts entre la pile et le circuit sont réalisés par des languettes qui s'étendent l'une sur la face supérieure de la pile, et l'autre sur le bord supérieur de sa face latérale, il est prévu d'engager la pile dans un trou ajusté que présente le fond de la boîte et de la retenir en place au moyen d'un couvercle amovible fixé contre le fond. Dans ce cas, toute possibilité de variation dans la hauteur de la pile est exclue. En outre, cette réalisation introduit des difficultés pratiques en ce qui concerne la garantie de l'étanchéité.

Le brevet FR 2 361 687 propose d'assurer la position axiale des piles en utilisant un système déjà connu en soi dans le cadre d'instruments tels que des rasoirs électriques, et qui consiste à disposer entre les piles et le fond de la boîte des disques en caoutchouc mousse. Une telle solution est toutefois inapplicable à des montres qui doivent satisfaire à des critères de qualité élevée étant donné, d'une part, les difficultés qu'il y a à positionner exactement des éléments comme ceux qui sont décrits dans le brevet français en question, d'autre part, les inconvénients dus au vieillissement de la matière prévue ainsi qu'à ses propriétés hygroscopiques, et, enfin, le fait que la nécessité de compenser les tolérances de fabrication sur la hauteur des piles ou des différences de hauteur de 0,5 mm correspondant à la différence entre une pile à longue durée de vie et une pile mince empêche une utilisation fiable de ce moyen connu.

Finalement la publication JP-A-54-98 670 de l'Office des Brevets japonais décrit une montre dont le dispositif de maintien de la pile comporte un couvercle amovible engagé dans une ouverture pratiquée dans le fond de la boîte et un logement ménagé dans le mouvement, en regard de cette monture. Pour faciliter le positionnement et l'extraction de la pile, une pièce séparée jouant le rôle d'un étrier de pression axiale, est placée entre les bords du logement et la pile. Elle est de forme annulaire et connecte électriquement l'électrode périphérique de la pile avec le circuit imprimé incorporé au mouvement en utilisant un ou plusieurs bras radiaux externes solidaires de l'étrier et s'étendant en oblique dans le mouvement. Cette pièce est poussée contre le mouvement par la pile lors de la mise en place du couvercle amovible dans l'ouverture du fond.

On a trouvé toutefois que cette solution au problème du maintien de la pile ne pouvait pas donner entièrement satisfaction notamment par le fait que la forme de l'étrier devrait être adaptée à la fois aux dimensions de la pile et à l'agencement du mouvement et le but de la présente invention est de réaliser un étrier de pression axiale qui soit d'un emploi aussi général que possible afin de simplifier la tenue des stocks, la fourniture des pièces de rechange pour service après vente, ainsi que les contrôles en cours de fabrication.

La présente invention a pour but de réaliser un dispositif de maintien d'une pile dans une montre-bracelet électronique comprenant un mouvement fixé dans une boîte entre un fond et une autre partie de la boîte, ce dispositif comportant un logement de pile de forme cylindrique ménagé dans le mouvement en regard du fond, des moyens de serrage pour positionner la pile dans le logement en agissant radialement sur elle, et un étrier de pression axiale ajusté sur la pile et formé d'une plaque ajourée. L'étrier de pression axiale est placé entre la pile et le fond, s'appuie élastiquement sur ce dernier et comprend au moins un élément d'appui contre une face de la pile, au moins une languette relevée destinée à s'appuyer élastiquement contre le fond de la boîte et une pluralité, de bras périphériques pliés dans le sens axial de façon à s'engager librement sur la pile ou à l'enserrer.

Ainsi, aux moyens de positionnement et de fixation qui agissent radialement sur la pile, l'invention propose d'ajouter un élément supplémentaire qui est ajusté à la pile. Cet élément supplémentaire constitué par l'étrier de pression axiale pourra être fabriqué en grande série uniquement en fonction des types de piles utilisées. Un même élément pourra être utilisé sur différents calibres puisqu'il n'est pas en contact avec le mouvement.

On va décrire ci-après, à titre d'exemple, deux formes d'exécution et quelques variantes du dispositif selon l'invention, en se référant au dessin annexé dont:

La fig. 1 est une vue en coupe axiale schématique d'une montrebracelet électronique équipée d'une forme d'exécution du dispositif,

la fig. 2 est une vue à plus grande échelle en coupe axiale montrant les détails d'un dispositif selon l'invention,

la fig. 3 est une vue en plan de dessous montrant la partie du mouvement visible à la fig. 2,

les fig. 4 et 5 sont des vues repectivement en coupe axiale et en plan de dessous, d'un étrier de pression axiale faisant partie de la deuxième forme d'exécution décrite ci-après, et

les fig. 6 à 10 sont des vues en plan de dessous de cinq autres variantes des étriers des fig. 3 ou 5.

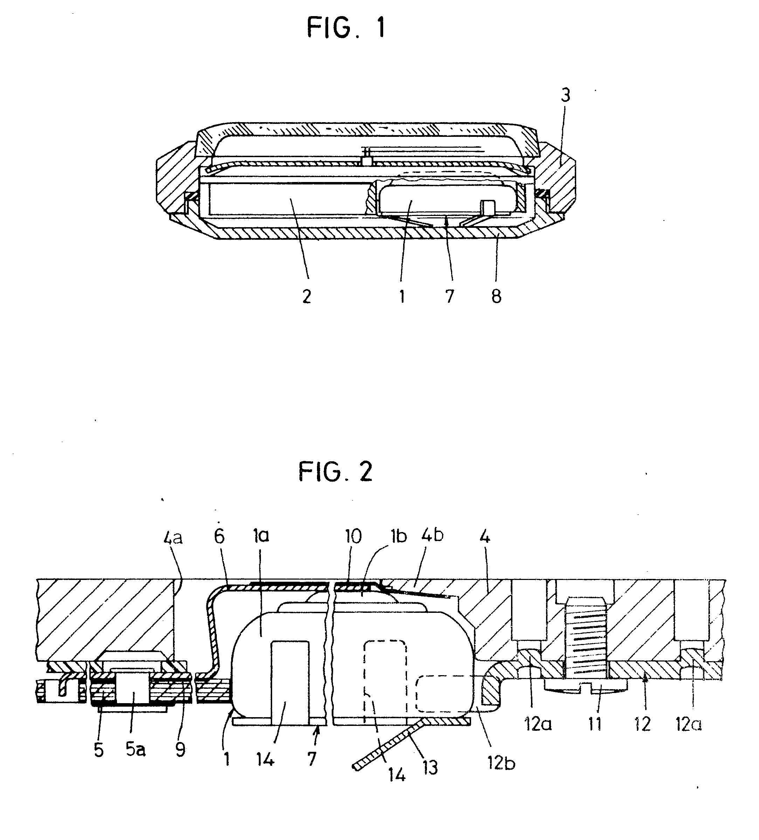

La fig. 1 montre la disposition d'une pile 1 à l'intérieur d'un mouvement électronique 2 dans une montre-bracelet à quartz à affichage analogique. La mouvement 2 est logé à l'intérieur d'une boîte qui comporte une carrure-lunette 3 et qui est fermée par un fond vissé 8. A son revers (fig. 2), le mouvement présente un logement de pile 4a limité latéralement par les bords d'une ouverture de la platine 4 et par le bord d'une échancrure que présente une plaque isolante 5 fixée sur la platine.

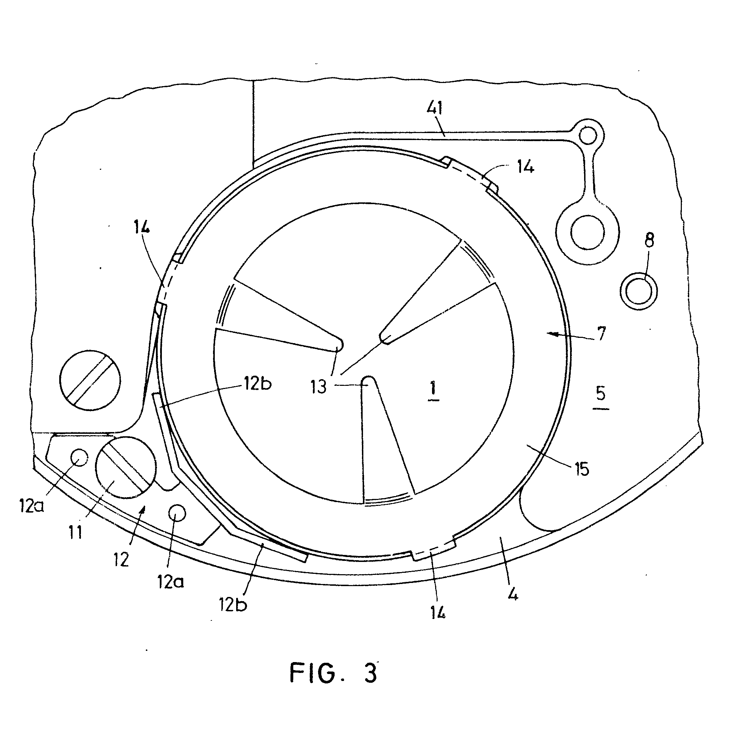

Cette plaque isolante peut être par exemple le support d'un circuit imprimé qui connecte différents éléments de la montre au circuit intégré contenant les éléments actifs essentiels du circuit électronique. Ainsi, la plaque de circuit imprimé 5 peut porter des bandes conductrices qui doivent être connectées au pôle positif et au pôle négatif de la pile. On sait que dans les piles usuelles, une électrode est constituée par la calotte extérieure de la pile, tandis que l'autre électrode est constituée par un couvercle de surface plus petite qui ferme la pile sur une de ses faces. Un joint d'étanchéité en matière isolante s'étend entre ces deux éléments, dont l'ensemble a une forme générale cylindrique. Dans la plupart des cas, le couvercle est le pôle négatif, dans d'autres, c'est le pôle positif. Dans la forme d'exécution représentée à la fig. 2, le couvercle 1b de la pile 1 est appuyé contre une lamelle conductrice 6 qui est reliée à la plaque 5 et qui est isolée de la platine 4 par une feuille isolante mince 10. Le couvercle 1b est pressé contre un rebord 4b de la platine. La partie cylindrique de la calotte de la pile est centrée par le bord en arc de cercle concave de la plaque 5 et par une autre languette de connexion comme on le verra plus loin. Finalement, un étrier de pression 7, constitué d'une seule pièce métallique, est logé entre le fond 8 de la boîte et la calotte de la pile 1. Cet étrier de pression constitu la partie essentielle du dispositif décrit ici. Il est repésenté plus en détail aux fig. 2 et 3.

La lamelle 6 est fixée à la plaque isolante 5 par un rivet 5a qui établit une connexion entre cette lamelle 6 et une bande imprimée 9 que porte la plaque 5. La feuille isolante 10 est accrochée au rebord 4b de la platine 4, de sorte que la pile peut occuper pratiquement toute l'épaisseur du mouvement.

On voit encore à la fig. 3 la façon dont le contact entre le circuit du mouvement et la calotte de la pile est établi. La bande imprimée 41 et la languette de contact 12 assurent cette connexion. La languette 12 (fig. 2 et 3) est formée d'une plaque découpée et pliée qui comporte un dégagement pour une vis de fixation 11 engagée dans un trou de la platine 4. Elle comporte en outre des parties en forme de tenons partiellement emboutis désignées par 12a qui servent au positionnement de la languette sur la platine 4 et qui s'engagent dans des trous correspondants de la platine. Une partie 12b de la languette 12 est pliée de façon à former deux ailes qui s'appliquent contre la face latérale de la calotte 1a. Ainsi, le logement 4a de la pile est limité par les bords d'une ouverture pratiquée dans la platine 4, par la languette 6 qui assure la connexion avec le couvercle de la pile, par le bord de la plaque 5 et par les ailes 12b de la pièce 12 qui entourent la face latérale de la pile et qui la maintiennent latéralement en position. La pièce séparée 7 qui constitue l'étrier de pression sert à maintenir la pile en position dans le sens axial. Elle empêche la pile de se déplacer jusqu'au fond 8 de la boîte en cas de choc axial. Normalement un léger déplacement de la pile pourrait être toléré, du fait de l'élasticité de la languette 6. Toutefois, la pièce 7 est utile dans les cas où l'espace entre la pile et le fond de la boîte est relativement grand, de sorte que le contact risque d'être rompu si la pile se déplace. Cette pièce peut être découpée et pliée à partir d'une plaque métallique par exemple une plaque d'acier ou de bronze au beryllium comme la languette 12.

Selon la fig. 3, elle a une forme générale circulaire et comporte une partie annulaire 15 reposant sur le fond de la calotte 1a de la pile le long de sa périphérie. De cette partie annulaire 15, s'étendent trois languettes radiales 13 orientées à 120° les unes des autres et pliées de façon à se relever en direction du fond de la boîte. La pièce 7 est en outre découpée avec trois bras radiaux extérieurs qui sont ensuite pliés à angle droit et qui sont désignés par 14. Deux de ces bras sont visibles à la fig. 2. On voit qu'ils s'étendent en regard de la face latérale de la calotte 1a sur la plus grande partie de sa hauteur.

Dans une forme d'exécution avantageuse, ces trois bras latéraux ne sont pas orientés à 120° les uns des autres, mais forment entre eux des angles différents, ce qui permet d'adapter plus facilement un même étrier à différents types de mouvements en l'orientant différemment par rapport à la plaque 5. Dans la forme d'exécution représentée au dessin, deux des bras 14 définissent entre eux un angle de 100°, tandis que chacun de ces deux bras définit avec le troisième un angle de 130°. Bien entendu, d'autres répartitions angulaires peuvent également être choisies.

Ainsi, dans la forme d'exécution décrite en relation avec les fig. 2 et 3, l'étrier 7 vient se poser sur la calotte 1a après que la pile a été mise en place. Cet étrier ne sert qu'à maintenir la pile axialement en place lorsqu'on met le fond, c'est-à-dire lorsqu'on ferme la boîte. Comme les connexions électriques sont établies par les pièces 6 et 12, le mouvement peut être testé avant d'être emboîté, sans qu'il soit nécessaire de procéder à aucune connexion spéciale en vue de cette opération. Les languettes 13 sont pliées vers le haut de façon à être comprimées par le fond 8, même en tenant compte des variations qui peuvent se présenter d'une boîte à l'autre, en ce qui concerne le jeu entre la pile et le fond. Le jeu qui est maintenu entre le fond et le mouvement, permet, le cas échéant, d'équiper le mouvement alternativement d'une pile épaisse ou d'une pile mince, et cela en utilisant le même étrier 7. La tenue des stocks et la fourniture des pièces de rechange est donc grandement simplifiée par cette possibilité de rationalisation.

Comme on l'a dit précédemment, la pièce 12 est en contact directement avec la platine. Elle assure la connexion entre la calotte de la pile et la masse du mouvement. Il est donc idifférent que l'étrier établisse aussi un contact électrique entre la calotte de la pile et le boîtier, puisque le boîtier sera également mis à la masse.

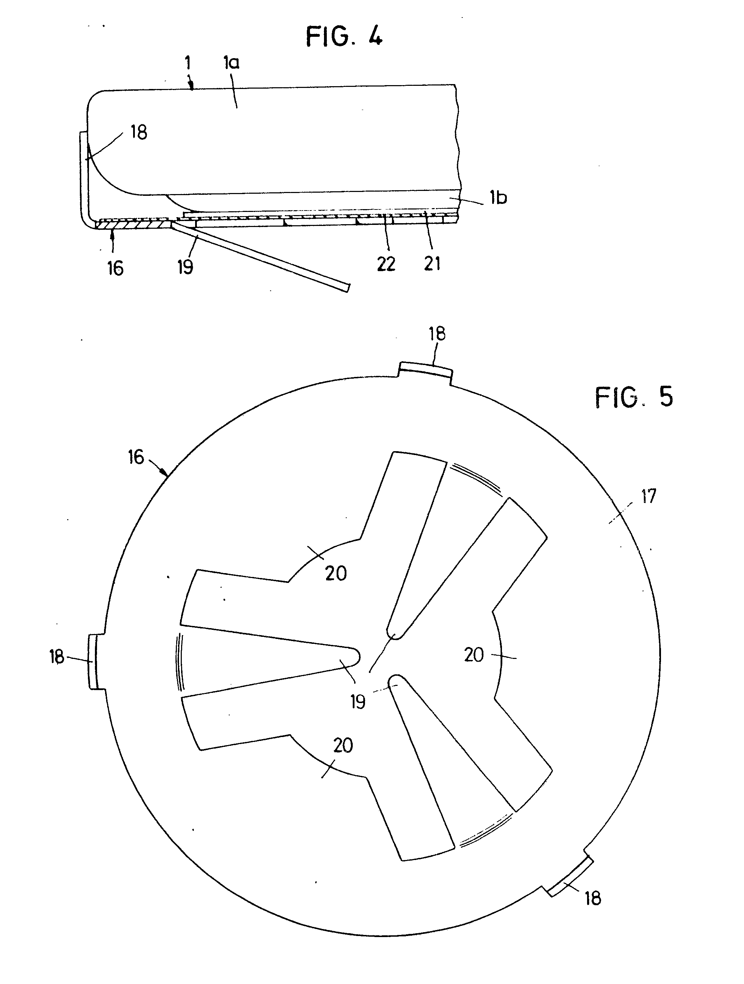

Dans la forme d'exécution représenté aux fig. 2 et 3, le logement de réception de la pile est constitué de façon que le couvercle de la pile soit tourné du côté de l'intérieur du mouvement, c'est-à-dire côté cadran. Toutefois, cette disposition n'est pas la seule qui puisse se rencontrer. Certains mouvements sont conçus de façon que la calotte de la pile soit tournée vers l'intérieur, tandis que le couvercle est tourné du côté du fond de la boîte. Un cas de ce genre est représenté, par exemple, aux fig. 4 et 5. La fig. 4 montre le profil d'une pile 1 dont le couvercle 1b est tourné vers le bas, c'est-à-dire vers le fond de la boîte, tandis que la calotte 1a est tournée vers l'intérieur du mouvement. L'étrier 16 utilisé dans ce cas, est également constitué d'une plaque métallique découpée et pliée. Toutefois, dans ce cas, sa forme doit être légèrement différente. L'étrier 16 dont la forme s'adapte aux deux positions de la pile, comporte une partie annulaire 17 dont font saillie trois bras radiaux externes 18 qui jouent le même rôle que les bras 14 dans la première forme d'exécution. En outre, l'étrier 15 comporte trois languettes élastiques radiales 19 dirigées vers l'intérieur comme les languettes 13. Entre ces languettes, la partie annulaire 17 présente des saillies planes 20. D'autre part, le rayon du bord intérieur de la partie annulaire 17 sera de préférence plus grand que le rayon du couvercle de la pile 1.

Un mouvement construit pour recevoir la pile dans cette position comprendra aussi un bâti mis à la masse. Lorsque la pile est engagée dans le mouvement, la calotte 1a se trouve tournée du côté de l'intérieur. Elle est en contact avec la platine qui est mise à la masse. C'est donc le couvercle 1b qui doit être connecté par des connexions isolées au circuit du mouvement. Pour cela, une lamelle de contact 21 est disposée de façon à venir se loger en contact avec le couvercle 1b et à être rattachée au circuit imprimé sans venir en contact avec la platine.

Comme on le voit à la fig. 4, l'étrier 16 étant posé au-dessous de la lamelle de contact 21, il convient de prévoir une isolation entre ces éléments. A la fig. 4, on voit une feuille isolante 22 qui peut être constituée par exemple par une feuille de plastique mince, interposée entre la languette 21 et la partie annulaire 17 de l'étrier 16. Cette feuille sépare les éléments 20 de la lamelle de contact 21. Au lieu de la feuille isolante 22 on pourrait aussi prévoir le dépôt d'un revêtement isolant et adhérant avant ou après le découpage sur l'étrier 16. Ce dépôt pourrait être fait par trempage de l'étrier dans un bain, de sorte que l'on obtiendrait alors une isolation complète de cet élément. Les éléments 20 assurent la transmission de la force de pression axiale à la pile à travers la languette 21 depuis le fond de la boîte qui va appuyer sur les languettes relevées 19. Quant aux bras 18, qui sont repliés axialement, et qui sont en contact avec la calotte 1a, ils sont évidemment connectés électriquement aux languettes 19 et au fond de la boîte, mais comme on l'a vu, cette connexion ne joue aucun rôle défavorable puisque tous ces éléments sont à la masse.

Dans cette forme d'exécution également, on peut prévoir que les bras 18, pliés axialement de façon à enserrer la pile ou à s'engager librement sur elle, soient espacés angulairement les uns des autres d'angles différents de 120°.

Un dispositif de maintien dont fait partie un étrier comme l'étrier 16 des fig. 4 et 5, ne comportera pas forcément la pièce 12 représentée à la fig. 2, puisque le contact entre la masse et la calotte est établi par l'intermédiaire de la surface inférieure de la calotte. D'autre part, la languette de contact 21, en contact avec le couvercle, est soit fixée au mouvement par l'intermédiaire d'une vis de façon à pouvoir être mise en place après le montage de la pile dans le mouvement, soit disposée obliquement de façon que la pile puisse être glissée de côté dans son logement. Dans ce cas, les éléments qui centrent la phile dans le mouvement n'auront pas besoin d'être aussi proéminents que ce n'est le cas dans la fig. 2.

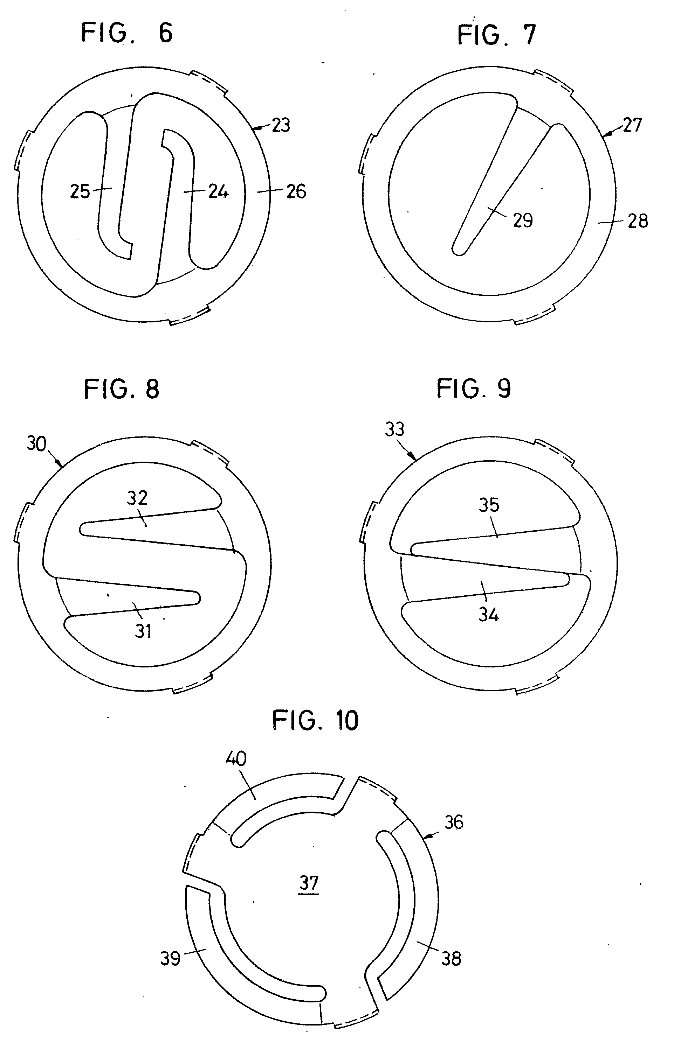

Les formes de réalisation possibles pour l'étrier de pression sont très nombreuses. Les fig. 6 à 10 représentent cinq variantes de cette pièce. A la fig. 6 on voit un étrier 23 qui comporte deux languettes élastiques jumelles 24 et 25 s'étendant à peu près parallèlement à partir du bord périphérique circulaire 26. A la fig. 7, le fond de l'étrier 27 comporte simplement une partie annulaire de largeur constante 28 et une languette élastique relevée 29 qui s'étend diamétralement. A la fig. 8, l'étrier 30 comporte deux languettes 31 et 32 diamétralement opposées, qui s'étendent avec un léger espace entre elles, tandis qu'à la fig. 9, l'étrier 33 comporte également deux languettes 34 et 35 diamétralement opposées, mais qui sont adjacentes l'une à l'autre. Pour réaliser des étriers universels standardisés uniquement en fonction du diamètre de la pile, il suffit dans les exécutions des fig. 6 à 9 de prévoir des éléments saillants intérieurs comme les éléments 20 de la fig. 5. Enfin, la fig. 10 représente une variante d'exécution d'un étrier 36 qui peut convenir pour les deux cas d'une pile dont le couvercle est tourné du côté du fond et d'une pile dont le couvercle est tourné vers le cadran. Cet étrier 36 comporte une partie centrale rigide 37 de forme approximativement circulaire, dont font saillie trois languettes en spirale 38, 39 et 40 qui sont relevées de façon à appuyer contre le fond. C'est à la racine de ces languettes en spirale que sont disposés les bras radiaux enserrant la pile. Ces bras radiaux, pliés axialement, tels que les bras 18 de la forme d'exécution selon la fig. 5 sont évidemment prévus dans chacune des formes d'exécution des fig. 6 à 10. Le cas échéant, les étriers de pression peuvent être réalisés en matière plastique. Comme il n'est pas indispensable qu'ils établissent un contact électrique, une telle exécution est possible sans difficulté. Dans le cas où le couvercle de la pile est tourné du côté du fond et où il faut prévoir une isolation de l'étrier, une exécution en matière plastique résoudrait le problème de cette isolation d'une façon très simple. Toutefois, l'élasticité des languettes serait alors plus faible et l'encombrement plus grand.

Dans les vues de profil, comme les fig. 2 et 4, les languettes élastiques relevées de façon à appuyer contre le fond ont été dessinées rectilignes. Toutefois, l'extrémité de ces languettes peut être arrondie de façon à s'appliquer tangentiellement contre le fond, ce qui pourrait être un avantage dans le cas où on utilise un fond vissé.

Comme on l'a dit précédemment, l'avantage essentiel du dispositif décrit, et en particulier de l'utilisation des étriers de pression placés entre la pile et le fond est que le même type d'étriers peut être utilisé pour des exécutions différentes d'un même calibre comportant différentes épaisseurs de piles ou même pour différents calibres. Le même étrier s'adapte à différentes hauteurs subsistant entre le fond de la boîte et la pile. Cette possibilité d'adaptation est utilisable, non seulement pour la mise en place de piles de différentes épaisseurs dans un même calibre emboîté dans une même boîte, mais également pour compenser les variations éventuelles du jeu entre le mouvement et le fond provenant de variations d'exécution dans les boîtes.

De plus en tout cas dans une exécution selon les fig. 2 et 3, l'utilisation de l'étrier de pression facilite le travail d'échange d'une pile. En effet, après avoir enlevé le fond, il suffit de soulever l'étrier de pression et la pile est directement accessible. Dans les dispositifs déjà connus où un élément élastique assure la pression axiale sur la pile, afin de la maintenir en place, il est nécessaire de commencer par enlever cet élément en dévissant une vis, ce qui est une complication supplémentaire.

Finalement, on a constaté que la présence de l'étrier de pression métallique ne joue pratiquement aucun rôle sur l'épaisseur totale de la montre. Au contraire, l'utilisation de ce dispositif de maintien permet souvent de réduire la hauteur totale de la montre puisque l'épaisseur de la plaque qui constitue les étriers décrits, peut être de l'ordre de 12/100 mm. Les languettes relevées peuvent être repliées de façon à s'écarter du plan général de l'étrier jusqu'à 1 mm, de façon à permettre l'engagement de piles de différentes hauteurs, de même qu'à compenser les tolérances en ce qui concerne la cote des fonds.

En conclusions, le dispositif décrit permet donc de remédier par une construction extrêmement simple à tous les inconvénients mentionnés au début. L'étrier décrit peut même remplacer le ressort de pression que l'on prévoit souvent lorsque le fond de la boîte est équipé d'une trappe amovible formant une ouverture située au droit de la pile.

## Revendications

1. Dispositif de maintien d'une pile dans une montre-bracelet électronique comprenant un mouvement (2) fixé dans une boîte entre un fond (8) et une autre partie (3) de la boîte, ce dispositif comportant un logement de pile de forme cylindrique ménagé dans le mouvement en regard du fond, des moyens de serrage (12b, 5) pour positionner la pile (1) dans le logement en agissant radialement sur elle, et un étrier de pression axiale (7) ajusté sur la pile et formé d'une plaque ajourée, caractérisé en ce que l'étrier de pression axiale est placé entre la pile et le fond, s'appuie élastiquement sur ce dernier et comprend au moins un élément d'appui (15) contre une face de la pile, au moins une languette (13) relevée destinée à s'appuyer élastiquement contre le fond de la boîte et une pluralité de bras périphériques (14) pliés dans le sens axial de façon à s'engager librement sur la pile ou à l'enserrer.

2. Dispositif selon la revendication 1, caractérisé en ce que les dits bras périphériques (14) sont répartis irrégulièrement sur le pourtour de l'étrier.

3. Dispositif selon la revendication 1, caractérisé en ce que lesdits moyens de serrage sont agencés de façon à fixer le pile dans ledit logement en agissant radialement sur elle et comprennent un bord incurvé d'une plaque de matière isolante (5) constituant un circuit imprimé et un élément de contact métallique (12) s'étendant en regard du bord incurvé du circuit imprimé, et connecté à la masse du mouvement.

4. Dispositif selon la revendication 1, caractérisé en ce qu'il comporte un moyen d'isolation (22) disposé entre l'étrier et la partie centrale de la face arrière (1b) de la pile.

5. Dispositif selon la revendication 4, caractérisé en ce que le moyen d'isolation consiste en une feuille isolante séparée de l'étrier.

6. Dispositif selon la revendication 5, caractérisé en ce que le moyen d'isolation est constitué par un revêtement ménagé sur une face de l'étrier en contact avec la pile.

7. Etrier de pression axiale pour la fixation d'une pile dans une montre-bracelet électronique et constitué d'une pièce en matière élastique découpée et ajourée, caractérisé en ce qu'il comprend une partie plane rigide (15, 20, 26, 28, 37) destinée à être en contact avec une face de la pile, au moins une languette élastique relevée (13, 19, 24, 25, 29, 31, 32, 34, 35, 38, 39, 40) reliée par une extrémité à ladite partie plane et rigide et susceptible de s'appuyer par l'autre extrémité contre le fond de la boîte de la montre, et plusieurs bras de positionnement radial (14, 18) s'étendant perpendiculairement à ladite partie plane du côté opposé aux languettes réparties sur le pourtour de l'étrier de manière à pouvoir s'engager librement sur la phile pu l'enserrer.

**Patentansprüche**

1. Vorrichtung zur Halterung einer Batterie in einer elektronischen Armbanduhr, die ein Werk (2) aufweist, das in einem Gehäuse zwischen einem Boden (8) und einem anderen Gehäuseteil (3) befestigt ist, zu welcher Vorrichtung ein zylinderförmiges Batterieaufnahmeabteil gehört, das im Uhrwerk dem Boden gegenüberliegend vorgesehen ist, nebst Spannmitteln (12b, 5) zum Positionieren der Batterie (1) im Aufnahmeteil durch radiales Einwirken auf dieselbe, und einem Axialdruckbügel (7), der auf die Batterie aufgepaßt ist und aus einer durchbrochenen Platte besteht, dadurch gekennzeichnet, daß der Axialdruckbügel zwischen der Batterie und dem Boden plaziert ist, sich auf letzterem elastisch abstützt und mindestens ein an einer Flachseite der Batterie anliegendes Andrückelement (15), mindestens eine angehobene, zur elastischen Abstützung am Gehäuseboden bestimmte Zunge (13) und eine Mehrzahl von umfänglichen Armen (14) besitzt, die in die Axialrichtung so abgebogen sind, daß sie die Batterie frei umgeben oder an ihr anliegen.

2. Vorrichtung nach Anspruch 1, dadurch gekennzeichnet, daß die besagten umfänglichen Arme (14) ungleichmäßig am Umfang des Bügels verteilt sind.

3. Vorrichtung nach Anspruch 1, dadurch gekennzeichnet, daß die besagten Spannmittel ausgebildet sind, um die Batterie dadurch im Aufnahmeabteil zu fixieren, daß sie radial auf sie einwirken und einen gekrümmten Rand einer, eine gedruckte Schaltung bildenden Isolierstoffplatte (5) und ein metallisches Kontaktelement (12) aufweisen, das sich gegenüber dem gekrümmten Rand der gedruckten Schaltung befindet und an die Masse des Uhrwerkes angeschlossen ist.

4. Vorrichtung nach Anspruch 1, dadurch gekennzeichnet, daß sie ein zwischen dem Bügel und der zentralen Partie der hinteren Flachseite (1b) der Batterie angeordnetes Isoliermittel (22) aufweist.

5. Vorrichtung nach Anspruch 4, dadurch gekennzeichnet, daß das besagte Isoliermittel aus einem vom Bügel getrennten Isolierblatt besteht.

6. Verfahren nach Anspruch 5, dadurch gekennzeichnet, daß das besagte Isoliermittel aus einem Belag besteht, der auf einer mit der Batterie in Berührung stehenden Flachseite des Bügels aufgebracht ist.

7. Axialdruckbügel für die Fixierung einer Batterie in einer elektronischen Armbanduhr, bestehend aus einem ausgeschnittenen und durchbrochenen Stück elastischen Materials, dadurch gekennzeichnet, daß er nebst einer steifen, ebenen Partie (15, 20, 26, 28, 37), die zum Anliegen an einer Flachseite der Batterie bestimmt ist, mindestens eine angehobene elastische Zunge (13, 19, 24, 25, 29, 31, 32, 34, 35, 38, 39, 40), die durch ein Ende mit der besagten steifen und ebenen Partie verbunden und dazu geeignet ist, mit dem anderen Ende am Boden des Uhrengehäuses anzuliegen, und mehrere der Radialpositionierung dienende Arme (14, 18) aufweist, die sich winkelrecht zur besagten Ebene zur den Zungen entgegengesetzten Seite erstrecken und am Umfang des Bügels verteilt sind, so daß sie die Batterie frei umgeben oder an ihr anliegen.

## Claims

1. Device for holding a battery in an electronic wrist watch comprising a movement (2) fixed in a case between a back (8) and another part (3) of the case, this device including a cylindrical battery recess contrived in the movement facing the back, gripping means (12b, 5) for positioning the battery (1) in the recess by acting radially upon the battery and an axial-pressure stirrup (7) fitted to the battery and formed of an openwork plate, characterized in that the axial-pressure stirrup is placed between the battery and the back, is resiliently supported on the latter, and comprises at least one support element (15) resting against a face of the battery, at least one raised tongue (13) intended to press resiliently against the back of the case, and a plurality of peripheral arms (14) bent axially so as to fit freely on the battery or to grip it closely.

2. Device according to claim 1, characterized in that the said peripheral arms (14) are irregularly distributed on the circumference of the stirrup.

3. Device according to claim 1, characterized in that said gripping means are so arranged as to fix the battery in said recess by acting radially upon the battery and comprise a curved edge of a plate of insulating material (5) constituting a printed circuit and a metal contact element (12) extending facing the curved edge of the printed circuit, and earthed to the frame of the movement.

4. Device according to claim 1, characterized in that it comprises an insulating means (18) disposed between the stirrup and the central portion of the rear face (1b) of the battery.

5. device according to claim 4, characterized in that the insulating means consists of an insulating strip separated form the stirrup.

6. Device according to claim 5, characterized in that the insulating means consists of a covering applied to a face of the stirrup in contact with the battery.

7. Axial-pressure stirrup for fixing a battery and an electronic wrist watch and consisting of a blanked and cut-away part of resilient material, characterized in that it comprises a rigid plane portion (15, 20, 26, 28, 37) intended to be in contact with a face of the battery, at least one raised resilient tongue (13, 19, 24, 25, 29, 31, 32, 34, 35, 38, 39, 40) joined at one end to said plane and rigid portion and capable of pressing with the other end against the back of the case of the watch, and several radial positioning arms (14, 18) extending perpendicular to said plane portion on the side opposite the tongues distributed on the circumference of the stirrup so as to be able to fit freely on the battery or to grip it closely.

# FIG. 1

# FIG. 2

FIG. 3

# FIG. 4

# FIG. 5

0 024 364

## FIG. 6

## FIG. 7

## FIG. 8

## FIG. 9

## FIG. 10